# EUROPEAN PATENT APPLICATION

(11) **EP 0 766 076 A2**
(43) Date of publication of application: **02.04.1997**
(21) Application number: 96114310.4
(22) Date of filing: 06.09.1996
(51) Int. Cl.: G01G 23/20

(54) **Weighing machine**

(30) Priority: 08.09.1995 GB 9518347
(71) Applicant: Byers, Edward Victor, Kinoulton, Nottingham NG12 3EA (GB)
(72) Inventor: Byers, Edward Victor, Kinoulton, Nottingham NG12 3EA (GB)
(74) Representative: Allsop, John Rowland

(57) **Abstract**

A weighing scale having a plurality of elastic elements which provide for restorable deflection under load. The scale has a support plate which rests on the elastic elements. A first lever is pivotally mounted on the support plate and has an intermediate position in engagement with one or more contact points provided on the base plate. A second lever is in contact with the first lever and pivotally mounted on the support plate for actuation in response to pivotal movements of the first lever as the support plate is loaded. The second lever is urged to maintain contact with the first lever, and thus the first lever with the one or more of the contact points on the base plate as the support plate lowers under load. A response means is provided to actuation of the second lever by the first lever to provide a measure of the magnitude of the load on the support plate.

## Description

This invention relates to weighing machines.

Known weighing machines comprise a weighing platform plate and base plate held apart by an array of springs each having a linear relationship between deflection and impressed load. In such devices, there is always some position at which a load may be applied so that the plates remain parallel during their approach.

This position is known as the invariant point and has the property that the distance between the plates at that point following application of the load remains the same regardless of any tilt induced by sideways movement of the load. In the case of a polygonal array of springs of equal characteristic the invariant point lies at the polygon centre and a measuring mechanism capable of indicating the distance between the plates at that point will also provide an indication of the applied load wherever it may be placed on the loading platform plate.

The mechanism to provide the parallel motion cannot be made to have small dimensions in the direction of motion without creating precision problems which are too costly to overcome to be commercially feasible.

Therefore, where the manufacture of aesthetically desirable and inexpensive slender weighing machines are concerned, the principle of parallelism has to be abandoned in favour of some arrangement in which tilting of the platform relative to the base of the machine consequent upon eccentric loading is without importance. This, in turn, requires the use of an indicating mechanism having a kinematic system which is not influenced by tilting of the loading platform.

According to the invention there is provided a weighing scale comprising a plurality of elastic elements which provide for restorable deflection under load mounted on a base plate, a support plate resting on the elastic elements, a first lever pivotally mounted on the support plate and at an intermediate position in engagement with one or more contact points provided on the base plate, a second lever in contact with the first lever and being pivotally mounted on the support plate for actuation in response to pivotal movements of the first lever as the support plate is loaded, means urging the second lever to maintain contact with the first lever and thus the first lever with said one or more contact points on the base plate as the support plate lowers under load with respect to the base plate, and means responsive to actuation of the second lever by said first lever to provide a measure of the magnitude of a load on the support plate.

Preferably the contact point at the intermediate position is provided by the conical end of a pillar provided on the base plate, the pillar having an axis lying on the central axis of the weighing scale.

In a preferred form the first lever is bifurcated into two arms which extend from its point of pivot on the support plate to straddle the central axis of the weighing scale and beneath the support plate with two contact points for the respective arms of the lever being provided on the base plate under which the arms are arranged for contact therewith.

With this arrangement the first lever follows the relative movement between the base plate and the support plate such that the mechanism is protected from the effects of shock loading.

Other features and advantages of the invention will become apparent to the reader as the invention is now described by way of example with reference to the accompanying drawings wherein;
Fig 1 is a perspective view of a weight indicating mechanism for a weighing scale according to one embodiment of the invention;
Figs 2(a) is a sectional view of a weight indicating mechanism mounted in a weighing scale according to another embodiment of the invention;
Fig 2(b) is a plan view of the mechanism shown in Fig 2(a);
Fig 2(c) is a cross-sectional view along A-A in Fig 2(l);
Fig 2(d) is a detailed view of the means of forming contact between the lever mechanism of Fig 2(a) and the base plate of the weighing machine;
Fig 3 is a plan view of a weighing scale incorporating a weight indicating mechanism according to the embodiment of the invention shown in Figs 2 (a);
Fig 4 is a cross-sectional view of the scale of Fig 3 and Fig 4(a) shows detail of positional adjusting mechanism for the indicating mechanism;
Fig 5 shows an alternative lever construction for the weight indicating mechanism of Fig 2(a);
Fig 6 and Fig 6(a) illustrate in plan and sectional view a method for mounting the sector gear of the weight indicating mechanism of Figs 1 and 2;
Fig 7 is a cross sectional view illustrating a method of providing the weighing machine with a graduated scale; and
Fig 8 is an alternative method to that described in Figs 6 and 6(a) for mounting the sector gear of the weight indicating mechanism of Figs 1 and 2.

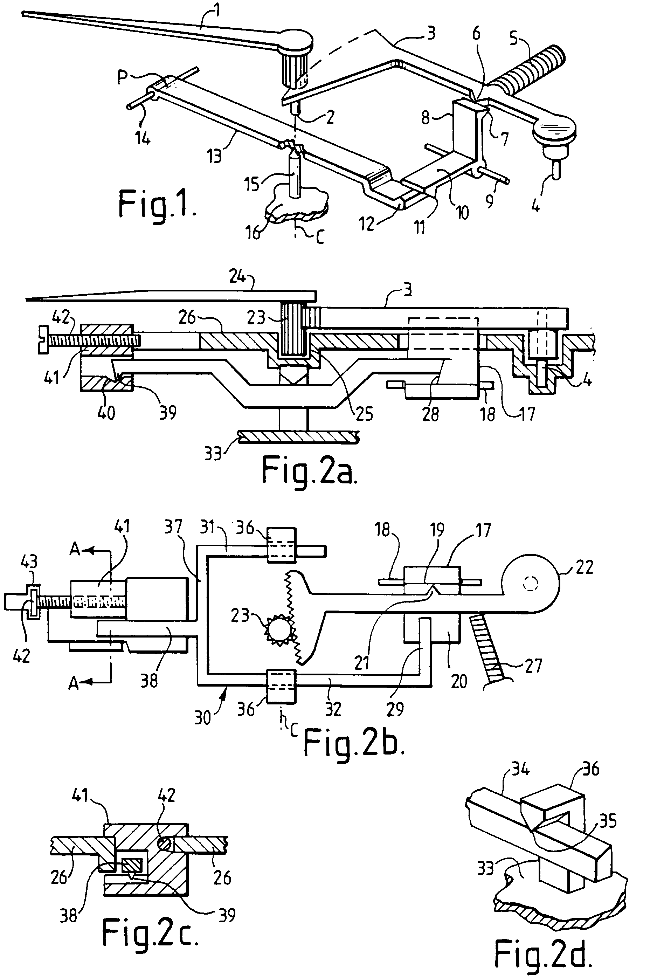

The indicator mechanism for a weighing scale shown in Fig 1 comprises a pointer and integral pinion 1 rotatable about a fixed spindle 2 having an axis lying on the central vertical axis of the weighing scale. The pinion 1 is engaged by a sector gear 3 rotatable about a fixed spindle 4 and urged by a compression spring 5 into contact through a wedge-shaped projection 6 on the gear 3, with the wedge-shaped projection 7 at the upper extremity of a bell crank lever 8 swingable about a fixed spindle 9.

The fixed spindles 2 and 4 are mounted in a mechanism support plate which is not shown in this figure.

The perpendicular horizontal arm 10 of the bell crank lever 8 carries a downwardly projecting wedge 11 engageable by a perpendicular upwardly projecting wedge 12 at one end of a lever 13 rotatable about a fixed spindle 14.

At the central vertical axis C of the machine, the lever 13 is engaged by the conical end of a pillar 15 integral with the base plate 16 of the weighing scale which is furnished with a spring array (not shown) to support the mechanism support plate.

As the distance between the base plate 16 and the mechanism support plate alters, the lever 13 changes its angular attitude and communicates the movement through the bell crank lever 8 and sector gear 3 to the pointer pinion 1 which swings accordingly. The axially central pivot point P of the lever 13, conical end of pillar 15 and the contact line of downwardly projecting bell crank wedge 11 all lie in the vertical plane through the machine centre and are colinear so that any tilting of the mechanism support plate which occurs owing to eccentric machine loading will be without influence on the movement of the pointer 1.

It is preferable that the lever 13 should be parallel to the normally horizontal mechanism support plate and that the plane through the spindle 4 of the sector gear 3 and its driving wedge 6 should also be parallel to the centre line of the lever 13 when the mechanism is at the centre of its journey, as rubbing and consequent friction effects at the various contacting points are then reduced to the minimum possible.

An adjustable mounting block (not shown in Fig 1) for the spindle 14 horizontally slidable in the mechanism support plate may be used to change the magnification ratio of the lever 13. The projecting wedge 11 of the bell crank lever 8 is made long enough in this case to accommodate such adjustable movement.

The simple mechanism described above has the disadvantages of requiring considerable vertical space and also, since it is positively driven by the platform movement, is subject to violent and possibly destructive movement when the platform is subjected to shock load. These drawbacks are eliminated in the more sophisticated mechanism now described with reference to Fig 2(a) and 2(b).

The indicator mechanism shown in Fig 2(a) and 2(b) comprises as before a bell crank lever 17 pivotally mounted on a fixed spindle 18 with the free end of the vertical arm of the bell crank lever 17 being provided with an inwardly directed wedge shaped projection 19 and the free end of the horizontal arm of the bell crank lever with an upwardly projecting wedge shaped projection 20.

The wedge shaped projection 19 on the vertical arm of the bell crank lever 17 is in point contact with a wedge shaped projection 21 on a sector gear 22 which engages the pinion 23 of a pointer 24 rotatably mounted in a recess 25 in a mechanism support plate 26 and axially with the central vertical axis C of the machine.

Point contact between the wedge shaped projection 21 on the sector gear 22 and the wedge shaped projection 19 on the vertical arm of the bell crank lever 17 is maintained by a spring 27 mounted in the machine frame.

The wedge shaped projection 20 on the horizontal arm of the bell crank lever 17 is in point contact with a wedge shaped perpendicularly disposed downwardly directed projection 28, on an inwardly directed arm portion 29 of a lever 30.

The lever 30 is bifurcated into two arms 31, 32 which straddle the pointer pinion 23 and its mounting lying between the mechanism support plate 26 and the machine base plate 33. Each arm 31, 32 is tapered to an edge 34. The edges 34 are in contact respectively with downwardly directed wedge shaped projections 35 provided on L-shaped support pillars 36 mounted to the base plate 33.

The two bifurcated arms 31, 32 are integral remote from the inwardly directed arm portion 29 with a cross piece 37 from which extends a support arm 38 having a conical projection 39 at its free end. The conical projection 39 is received in a corresponding depression 40 formed in a mounting block 41 adjustably attached to the mechanism support plate 26 by means of an adjusting screw 42.

The pivot point of the conical projection 39 on the support arm 38 and the contact points between the wedge shaped projections 35 and the edges 34 of the two lever arms 31, 32 and between the inwardly directed arm portion 29 and its contact point with the wedge shaped projection 20 on the bell crank lever 17 are all coplanar.

In the arrangement shown furthermore, the contact points between the wedge shaped projections 35 and edges 34 of lever arms 31 and 32 lie on an imaginary line through the central axis C of the machine and perpendicular to another imaginary line joining pivot point 39 and the contact point between wedge shaped projection 20 on lever 17 and wedge shaped projection 20 on lever arm portion 29.

The two imaginary lines are thus coplanar with the imaginary line joining the two contact points 34, 35 lying in a plane containing the vertical axis C of the weighing scale.

The lever 30 then behaves as though it is being actuated at the machine centre and is indifferent to any tilting action.

With this arrangement moreover the lever 30 now follows the relative movement between the mechanism base plate 33 and mechanism support plate 26, instead of being driven by it and the mechanism is protected from the effects of shock loading.

As mentioned above, mounting block 41 is radially slidable with respect to the support plate 26 under the influence of the adjusting set screw 42, its head being confined in a slot 43 in the mechanism plate 26 so as to be rotatable only.

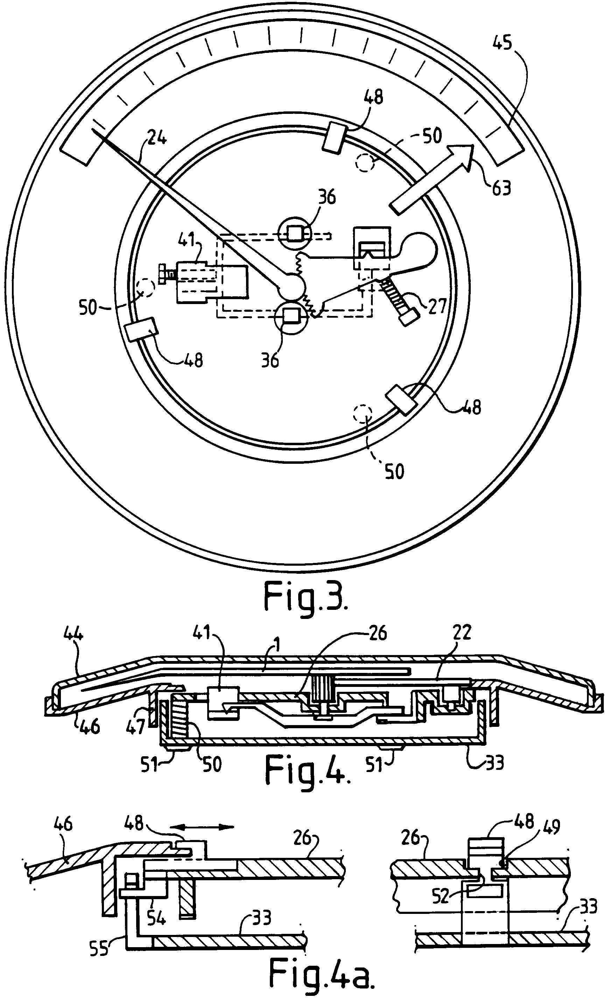

A flat circular domestic scale incorporating the indicator mechanism of Fig 2(a) is depicted in Figs 3 and 4. The scale has a circular loading platform 44 arranged to be transparent at least around a circular zone near its edge to permit viewing of a suitably graduated scale 45. The platform 44 is peripherally attached to an annular shell 46 provided with a circular integral skirt 47. The platform 44 and shell 46 are of part-conical formation as shown, as this endows the construction with considerable stiffness.

The annular shell 46 rests on three latch pieces 48 capable of sliding radially in corresponding slots 49 formed in the mechanism support plate 26 which in turn rests on three spiral support springs 50 carried by the machine base plate 33.

The springs 50 are held in place by peg-shaped projections (not shown) on the plates 26 and 33, the pegs engaging the inner diameters of the spring 50. The base plate 33 is provided with three foot supports 51 made of a soft friction-inducing material below the springs 50 or closely adjacent thereto.

The main operative parts of the indicator mechanism described with reference to Figs 2(a), (b), (c) and (d) is depicted in Figs 3 and 4 as shown, and no further explanation of its operative parts is required.

Fig 4a shows the latch-pieces 48 in detail which are made from a slippery plastics material such as acetal resin. The latch pieces 48 have grooves 52 slidable in correspondingly radially formed slots 49 in the edge of the mechanism support plate 26 adjacent the springs 50.

The latch-pieces 48 are slid to their innermost positions to permit assembly after which they are slid outwards to perform three functions, the first to locate and hold down the shell 46 and to provide slippery surfaces to allow the easy rotation thereof and to lock and retain base plate 33, a projection 54 entering corresponding loose fitting apertures 55 in the sides of the base plate structure 33 as shown.

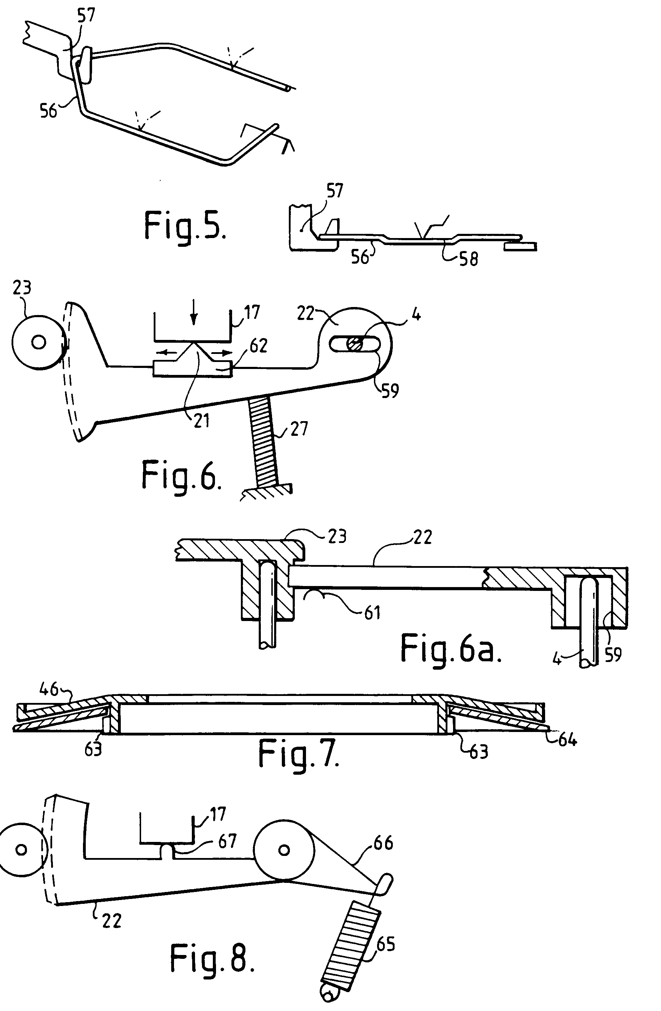

Fig 5 illustrates an alternative method of using stiff wire for the lever 30 of Fig 2, so that instead of the cross piece 37 and end support arm 38, an angle section 56 may be formed in the wire with its apex resting in a hook shaped projection 57 below the adjustment block 41. The transmitted pressure from the spring 24 serves to hold the angle section 56 in the hook-shaped projection 57. The lever 30 is then accurately located both laterally and longitudinally and the necessary ability to rotate freely to a limited extent in all directions is retained. Coplanarity of all the contacting points can be realised by the use of a slight joggle bend 58 as shown in Fig 5a.

Fig 6 shows a method of mounting the sector gear 22 so that gear tooth lash or looseness of tooth engagement is easily eliminated.

In weighing machines and other types of indicator, such lash results in an intolerable uncertainty in pointer movement and it is expensively impractical to avoid it by sufficiently accurate manufacture and location of the relevant parts.

The difficulty may be overcome by the use of a slot-shaped bearing 59 in the sector gear 22 instead of a round hole.

The slot 59 is a close running fit on the mounting spindle 4 of the sector gear 22, but permits a degree of radial movement and is of sufficient vertical length to prevent sideways toppling and a projection 61 on the upper plate piece prevents downward movement.

The urging spring 27 is angled as shown so as to induce an inwardly directed radial pressure on the sector gear 22 forcing it lightly into correct engagement with the mating pinion. The artifice is satisfactory for a sector gear moving through about 45° of arc.

An alternative method, as shown in Fig 6, of adjustment to the magnification ratio may be provided by arranging for the bell crank lever 17 to engage the sector gear 22 through the contacting wedge 21 carried on a slidably mounted block 62 by means of which the contact point of the wedge 21 may be moved along a line through pinion 23 and spindle 4. The position of the block 62 may be controlled by any convenient known screwing device mounted in sector gear 22. The adjustable mounting block 41 is then not used and the lever 30 may be pivoted at a fixed position.

In the above described scale embodiment shown in Figs 3 and 4, it is intended that the unloaded platform be rotated to bring the indicating pointer to the scale zero before adding any weight and again so after placing any empty receptacle on the machine. The machine will then indicate the weight of any material poured into the receptacle and may then be readjusted to bring the pointer to the scale zero before adding any further material, the weight of which addition will then be shown.

A further useful feature may be incorporated in the weighing scale to show how much weighing capacity remains unused. This consists of an additional pointer 63 adjustably attached to the mechanism plate 26 and directed to the scale upper limit when the unloaded machine is adjusted so that the moving pointer is directed towards the scale zero mark. As the scale platform is rotated after each additional weight is added, this pointer attached to the mechanism plate will show on the measuring scale how much capacity remains unused. When the two pointers coincide, the scale capacity has become exhausted In Fig 3 this additional pointer attached to mechanism plate 26 is shown at 63. It is necessarily thin and snugly adjacent shell 46 so as not to foul the moving pointers 24.

Fig 7 shows an alternative method of providing the machine with a graduated scale, its use being preferred when the scale is designed for heavy loading which is inclined to lead to sluggishness in turning the scale body when made in the manner previously described.

In this embodiment the annular shell 46 is made of transparent material and provided with at least three projections 63 to engage and retain a rotatable opaque shell 64 which is furnished with suitable scale markings. This may protrude past the edge of the annular shell 46 and have a knurled edge to facilitate relative rotation without moving the body of the machine. Annular shell 46 is then furnished with slotted emplacements to accept the latches 48 to prevent rotation relative thereto.

Fig 8 shows an alternative method of providing urging spring means for sector gear 22 which may be used if space permits. This takes the form of a tension spring 65 cooperating with a tail and spring hook 66 extending past the sector gear pivot and acting at an angle so as to urge the part towards the pointer pinion as well as to force the part into contact with the bell crank lever 17. This spring then has the same effect as the previously described compression spring 27.

As an alternative to the sharp contacting wedge 21, an excrescence 67 of semi-circular form may be used. Since the cooperating wedge of the bell crank lever is always at the same distance from the circle centre it is moved through the same distance as it would be by a sharp wedge coincident therewith, but the contacting pressure and friction are reduced.

## Claims

1. A weighing scale comprising a plurality of elastic elements which provide for restorable deflection under load mounted on a base plate, a support plate resting on the elastic elements, a first lever pivotally mounted on the support plate and at an intermediate position in engagement with one or more contact points provided on the base plate, a second lever in contact with the first lever and being pivotally mounted on the support plate for actuation in response to pivotal movements of the first lever as the support plate is loaded, means urging the second lever to maintain contact with the first lever and thus the first lever with said one or more contact points on the base plate as the support plate lowers under load with respect to the base plate, and means responsive to actuation of the second lever by said first lever to provide a measure of the magnitude of a load on the support plate.

2. A weighing scale as claimed in claim 1 wherein the contact point at the intermediate position is provided by the conical end of a pillar provided on the base plate, the pillar having an axis lying on the central axis of the weighing scale.

3. A weighing scale as claimed in claim 1 or 2 wherein the first lever is a single straight lever having a central pivot point and a single contact point on the base plate, which central pivot point and single contact point are colinear with the point of contact of the second lever with the first lever and lie in a vertical plane containing the central axis of the weighing scale.

4. A weighing scale as claimed in claim 1 wherein said first lever has two arms extending from its point of pivot to straddle the central axis of the weighing scale beneath said support plate, two said contact points being provided on the base plate under which the arms are respectively arranged for contact therewith.

5. A weighing scale as claimed in claim 4 wherein the two contact points on the base plate lie on a first imaginary line through the central axis of the machine and perpendicular to a second imaginary line joining the pivot point of the first lever and contact point of the first lever with the second lever and lying in the vertical plane containing the central axis of the weighing scale, said first and second imaginary lines being coplanar.

6. A weighing scale as claimed in any preceding claim wherein the second lever is a bell crank lever.

7. A weighing scale as claimed in claim 6 wherein one arm of the bell crank lever is in contact with the first lever, the other arm with the arm of a sector gear pivotally mounted in the support plate, the sector gear meshing with a weight indicating pointer pinion provided on the support plate, with the axis of the pinion lying on the central axis of the weighing scale.

8. A weighing scale as claimed in claim 7 wherein the sector gear is mounted on a shaft attached to the support plate, the shaft engaging an elongate slot in the arm of the sector gear to permit limited radial movement as the sector gear rotates around the shaft.

9. A weighing scale as claimed in claim 8 wherein said urging means is in the form of a spring held under tension or compression against the sector gear.

10. A weighing scale as claimed in claims 4 to 9 wherein the contact points of the first lever on the support plate, between the bell crank lever, the first lever and the sector gear are along cooperating wedge shaped projections.

11. A weighing scale as claimed in claim 10 wherein the first lever is pivotally mounted in a support block slidably adjustable on the support plate whereby to vary the magnification ratio of the first lever.

12. A weighing scale as claimed in claim 10 wherein the wedge shaped projection on the sector gear is mounted on a slidably moveable block attached to the arm of the sector gear thereby to vary the magnification ratio of said first lever.

13. A weighing machine as claimed in claim 4 wherein the two contact points of the first lever with base plate lie on a first imaginary line through the central axis of the machine and perpendicular to a second imaginary line also through the central axis of the machine and joining the pivot point of the first lever and the contact point of the first lever with the second lever and lying in the vertical plane containing the central axis of the machine, said first and second imaginary lines being coplanar on the first lever.

14. A weighing machine as claimed in any preceding claim wherein the second lever is a bell crank lever provided with contacting wedges.

15. A weighing machine as claimed in claim 14 wherein one arm of the bell crank lever is formed to a wedge lying in the vertical plane through the central axis of the machine which is in contact with the first lever, the other arm with the arm of a sector gear pivotally mounted in the support plate, the sector gear meshing with a weight indicating pointer pinion provided on the support plate, with the axis of the pinion lying on the central axis of the weighing scale.

16. A weighing machine as claimed in claim 15 wherein the sector gear is urged into contact with the bell crank lever and towards the machine centre by tension or compression spring means.
